# FASCICULE DE BREVET EUROPEEN

(11) **EP 1 213 807 B1**
(45) Date de publication et mention de la délivrance du brevet: **09.02.2011**
(21) Numéro de dépôt: 01403097.7
(22) Date de dépôt: 03.12.2001
(51) Int. Cl.: H02B 13/025

(54) **Appareillage électrique blindé avec un disque de rupture protégé contre les agressions atmosphériques**
Gekapselte Schaltanlge mit einer gegenüber atmosphärischen Einflüssen geschützten Berstscheibe
Metal clad electrical apparatues with a rupture disc protected against atmospheric agressions

(30) Priorité: 06.12.2000 FR 0015783
(43) Date de publication de la demande: 12.06.2002
(73) Titulaire: AREVA T&D SAS, 92084 Paris La Défense Cedex (FR)
(72) Inventeur: Motro, Pascal, 34090 Montpellier (FR); Lauret, Ollivier, 34200 Sete (FR)
(74) Mandataire: Poulin, Gérard

(56) Documents cités:
- FR-A- 2 713 837

## Description

L'invention porte sur un appareillage électrique à isolation gazeuse comprenant au moins une cuve qui est remplie d'un gaz diélectrique et qui est munie d'un disque de rupture qui se rompt en cas de surpression du gaz diélectrique dans la cuve pour permettre l'évacuation du gaz vers l'extérieur de la cuve. La matière constituant le disque peut être du métal, du graphite ou un autre matériau.

La rupture du disque servant de dispositif de décharge de pression est obtenue en fragilisant le disque lui-même, c'est-à-dire en le réalisant avec une tôle de plus faible épaisseur que celle de la cuve.

Un tel appareillage est généralement situé dans un environnement non protégé des intempéries et variations climatiques, mais il n'est pas exclu de l'installer dans un environnement relativement protégé comme par exemple un local abrité.

Le disque de rupture, s'il n'est pas protégé des variations de température de l'environnement extérieur à la cuve, est soumis à des dilatations différentielles entre lui-même et la cuve. Ces dilatations différentielles peuvent entraîner à terme une dégradation des performances mécaniques du disque de rupture.

Par ailleurs, si ce disque n'est pas protégé de l'humidité et/ou de la pollution de l'environnement extérieur à la cuve, II peut être sujet à des phénomènes de corrosion plus ou moins rapide du fait de l'humidité ou de la condensation affectant la paroi extérieure de la cuve.

Bien qu'il soit possible de réaliser le disque de rupture en un matériau résistant à la corrosion, comme le nickel, cette solution reste très coûteuse. Il existe une autre solution consistant à protéger le disque principal des agressions externes par un second disque de rupture, comme décrit dans le brevet DE 3 743 562. Cette solution est toutefois délicate à réaliser pour que la rupture se fasse correctement, et une étanchéité additionnelle est requise pour éviter complètement la pénétration d'air externe dans l'espace entre les deux disques de rupture. Une telle réalisation est donc délicate et onéreuse.

Le but de l'invention est d'apporter une solution simple et relativement économique pour la protection contre les agressions atmosphériques d'un dispositif de décharge de pression tel un disque de rupture installé dans un appareillage électrique à isolation gazeuse.

A cet effet, l'invention a pour objet un appareillage électrique à isolation gazeuse comprenant au moins une cuve remplie d'un gaz diélectrique et munie d'un disque de rupture qui se rompt en cas de surpression du gaz diélectrique dans la cuve pour permettre l'évacuation du gaz vers l'extérieur de la cuve, caractérisé en ce que le disque de rupture est protégé contre les agressions de l'environnement extérieur à la cuve en étant disposé à l'intérieur d'un coffret cloisonné à atmosphère dont la température et d'hygrométrie sont contrôlées.

Ce coffret peut avantageusement être un coffret basse tension et/ou support de commande mécanique équipant ledit appareillage électrique. Généralement, un tel coffret basse tension et/ou support de commande mécanique est prévu pour préserver à l'intérieur du coffret une température et une hygrométrie maîtrisées. En particulier, il est généralement équipé d'une résistance anti-condensation et/ou de chauffage commandée en fonction des conditions extérieures atmosphériques et éventuellement du courant traversant l'appareillage électrique sur lequel est monté le coffret. Par conséquent, un tel coffret peut parfaitement remplir la fonction de protection d'un disque de rupture contre les agressions atmosphériques.

Pour éviter, lors de la rupture du disque, que le gaz d'isolation de la cuve vienne polluer les équipements dans le coffret, le coffret peut comporter une ouverture fermée par un volet. Ainsi, le gaz en surpression qui s'évacue de la cuve grâce à la rupture du disque, est guidé jusqu'à l'ouverture du coffret par un déflecteur ou un conduit d'évacuation. L'ouverture dans le coffret est de préférence réalisée dans la partie supérieure du coffret pour réduire les risques de projection de gaz vers des personnes se trouvant à proximité du coffret.

L'appareillage électrique selon l'invention est décrit ci-après plus en détail et illustré sur les dessins.

La figure 1 est une illustration schématique , selon une vue de face, d'un appareillage électrique comportant un disque de rupture protégé par un coffret basse tension et support de commande.

La figure 2 est une illustration de l'appareillage électrique de la figure 1, mais vu de côté.

La figure 3 illustre schématiquement l'ouverture du coffret pour laisser s'échapper le gaz en surpression.

La figure 4 illustre une disposition à deux appareillages électriques ayant en commun un coffret basse tension et support de commande protégeant les disques de rupture des deux appareillages.

La figure 5 illustre un conduit d'évacuation ayant un double déflecteur prévu pour la disposition d'appareillages montrée sur la figure 4.

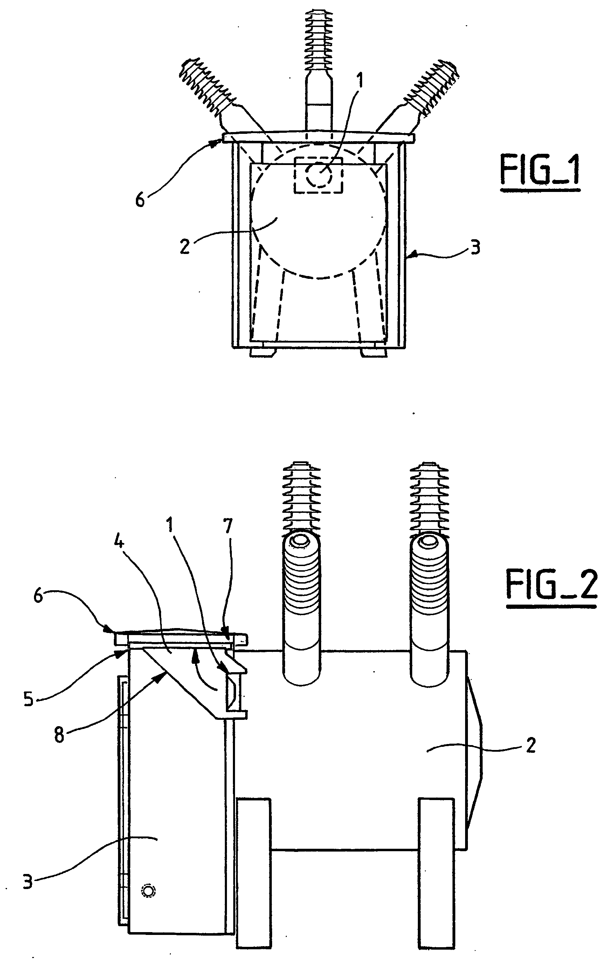

Sur les figures 1 et 2, un disque de rupture 1 est disposé à une extrémité d'une cuve cylindrique 2 d'un appareillage électrique, par exemple un disjoncteur blindé à isolation gazeuse. Un coffret basse tension et support de commande 3 est monté à cette extrémité de la cuve 2. Le disque de rupture 1 est disposé dans un coffret cloisonné à atmosphère contrôlée, ici le coffret 3. Le disque de rupture est ainsi protégé de l'environnement extérieur.

Ce coffret 3 est équipé d'une résistance de chauffage et/ou d'anti-condensation pour le contrôle des variations de température et d'hygrométrie à l'intérieur du coffret.

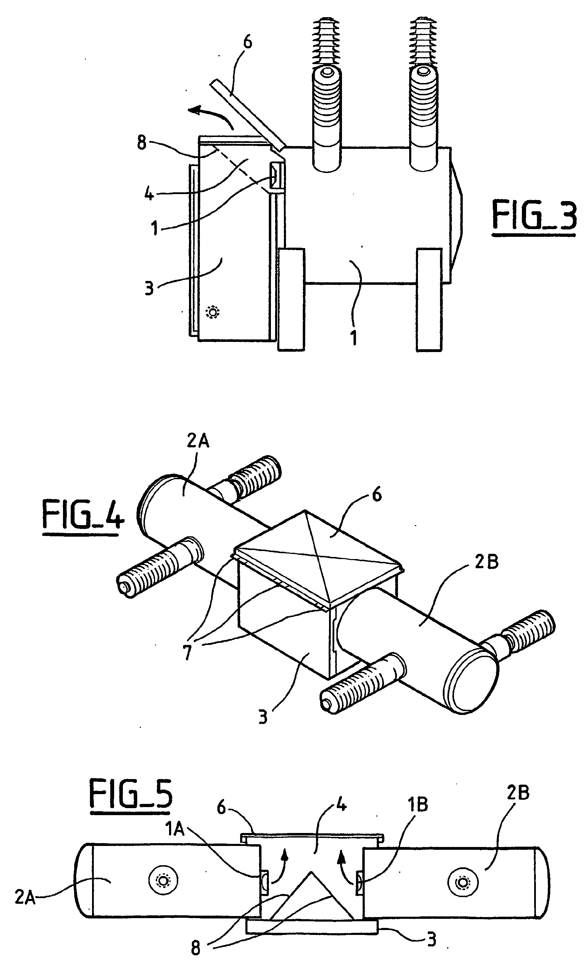

Le coffret 3 comporte un toit 6 formé par un couvercle articulé sur un axe 7 qui vient fermer l'ouverture de toit. Le toit 6 recouvre un cloisonnement 5 prévu pour isoler les gaz d'évacuation du reste du compartiment et pour permettre l'application de la surpression sur toute la surface du couvercle 6. Le gaz en surpression qui s'évacue de la cuve 2 par l'ouverture laissée par la rupture du disque est guidé jusqu'au cloisonnement 5 par un déflecteur 8 délimitant un conduit d'évacuation 4. Comme illustré sur la figure 3, le toit 6 du coffret s'ouvre sous la pression du gaz guidé dans le conduit d'évacuation par le déflecteur 8 pour laisser s'échapper le gaz vers le haut à l'extérieur du coffret 3.

Sur les figures 4 et 5, les cuves cylindriques 2A,2B de deux appareillages électriques adjacents, par exemple deux disjoncteurs blindés à isolation gazeuse, sont alignées coaxialement et maintenues par un coffret basse tension et support de commande 3 commun qui est interposé entre les deux cuves 2A,2B. Chaque cuve 2A,2B comporte un disque de rupture 1A,1B visible sur la figure 5 à son extrémité entourée par le coffret 3. Le coffret 3 comporte un toit articulé 6 autour d'un axe de rotation 7 et forme un volet qui vient fermer une ouverture de toit par où est évacué le gaz qui s'échappe d'une des cuves 2A,2B en cas de rupture de son disque. Le conduit d'évacuation 4 comprend avantageusement un double déflecteur 8 assurant la même fonction que le déflecteur représenté sur les figures 2 et 3, à savoir guider dans le conduit d'évacuation vers le toit 6 le gaz en surpression s'échappant de la cuve. En outre, ce double déflecteur permet qu'un disque de rupture expulsé ricoche vers le haut, évitant ainsi d'aller endommager l'autre disque de rupture situé en vis-à-vis.

## Revendications

1. Un appareillage électrique à isolation gazeuse comprenant au moins une cuve (2,2A,2B) renfermant un gaz diélectrique et munie d'un disque de rupture (1) qui se rompt en cas de surpression du gaz diélectrique dans la cuve pour permettre l'évacuation du gaz vers l'extérieur de la cuve, **caractérisé en ce que** le disque de rupture est protégé contre les agressions de l'environnement extérieur à la cuve en étant disposé à l'intérieur d'un coffret (3) cloisonné à atmosphère dont la température et d'hygrométrie sont contrôlées.

2. L'appareillage électrique selon la revendication 1, dans lequel le coffret (3) est un coffret basse tension et/ou support de commande mécanique équipant ledit appareillage.

3. L'appareillage électrique selon l'une des revendications 1 à 2, dans lequel le coffret (3) comporte une ouverture fermée par un volet (6) et en ce que le gaz en surpression qui s'évacue par l'ouverture dans la cuve laissée par la rupture du disque est guidé jusqu'à l'ouverture du coffret par un déflecteur (8) ou un conduit d'évacuation (4).

4. L'appareillage électrique selon la revendication 3, dans lequel le volet (6) forme le toit du coffret(3).

5. L'appareillage électrique selon l'une des revendications 3 ou 4, dans lequel deux cuves (2A, 2B) sont adjacentes à un même coffret (3) dont le conduit d'évacuation (4) comprend un double déflecteur (8).

## Claims

1. Gas insulated electrical gear comprising at least one tank (2, 2A, 2B) containing a dielectric gas and provided with a rupture disk (1) which ruptures in the event of the dielectric gas in the tank reaching an excessive pressure so as to allow the gas to be exhausted from the tank, the gear being **characterized in that** the rupture disk is protected against attack from the environment outside the tank by being placed inside an enclosed cabinet (3) having an atmosphere in which temperature and humidity are controlled.

2. The electrical gear of claim 1, in which the cabinet (3) is a low voltage and/or mechanical control supporting cabinet fitted to said gear.

3. The electrical gear of claim 1 or claim 2, in which the cabinet (3) has an opening closed by a flap (6), and in which the gas at excess pressure escaping through the opening in the tank left by the disk rupturing is guided to the opening of the cabinet by a deflector (8) or an exhaust duct (4).

4. The electrical gear of claim 3, in which the flap (6) forms the roof of the cabinet (3).

5. The electrical gear of claim 3 or claim 4, in which two tanks (2A, 2B) are adjacent to a common cabinet (3) whose exhaust duct (4) includes a double-deflector (8).

## Patentansprüche

1. Gasisolierte Schaltanlage mit zumindest einem Behälter (2, 2A, 2B), der ein dielektrisches Gas einschließt und mit einer Berstscheibe (1) versehen ist, die bei Überdruck von dielektrischem Gas in dem Behälter berstet, um das Austreten von Gas nach außerhalb des Behälters zu gestatten, **dadurch gekennzeichnet, dass** die Berstscheibe vor Umwelteinflüssen außerhalb des Behälters dadurch geschützt ist, dass sie innerhalb eines Kastens (3) angeordnet ist, der von der Atmosphäre abgeschirmt ist und von dem Temperatur und Luftfeuchtigkeit kontrolliert werden.

2. Schaltanlage nach Anspruch 1, wobei der Kasten (3) ein Niederspannungskasten und/oder mechanischer Betätigungskasten ist, mit dem die Schaltanlage ausgestattet ist.

3. Schaltanlage nach einem der Ansprüche 1 bis 2, wobei der Kasten (3) eine mit einer Klappe (6) verschlossene Öffnung aufweist und das Überdruckgas, das durch die aufgrund des Berstens der Scheibe entstandene Öffnung im Behälter entweicht, über eine Ablenkvorrichtung (8) bzw. eine Abführleitung (4) zur Öffnung des Kastens geleitet wird.

4. Schaltanlage nach Anspruch 3, wobei die Klappe (6) die Überdachung des Kastens (3) bildet.

5. Schaltanlage nach einem der Ansprüche 3 oder 4, wobei zwei Behälter (2A, 2B) an einen gleichen Kasten (3) angrenzen, dessen Abführleitung (4) eine zweifache Ablenkvorrichtung (8) enthält.
